# EUROPEAN PATENT SPECIFICATION

(11) **EP 0 563 000 B1**
(45) Date of publication and mention of the grant of the patent: **02.05.1997**
(21) Application number: 93600003.3
(22) Date of filing: 26.01.1993
(51) Int. Cl.: E05D 11/00, A47J 37/06

(54) **Toaster hinge**
Scharnier für Brotröster
Charnière pour grille-pain

(30) Priority: 27.02.1992 GR 92020094
(43) Date of publication of application: 29.09.1993
(73) Proprietor: Mavridis, Vasilios of Theodoros, Piraeus 18540 (GR)
(72) Inventor: Mavridis, Vasilios of Theodoros, Piraeus 18540 (GR)

(56) References cited:
- DE-A- 2 510 227
- DE-A- 3 319 757

## Description

The present invention relates to a hinge for a grill of the type comprising an upper grill part and a lower grill part .

An example of such a grill is shown by the document DE-A-2 510 227 .

The hinge comprises two assemblies , which can be plastic assemblies . One of these assemblies is fixed to the lower part of the appliance and the other to the upper part .

Hinges of this type are well known and the allow in this type of appliances the two parts to assume their different operating positions ( closed with plates in contact, closed with plates in parallel distance , open in 180° position ).

The document DE-A-3 319 757 shows for example a hinge for an electric appliance composed of a first assembly ,comprising a male hinge portion attachable by screws to a first part of the electric appliance and an upper internal cover, and of a second assembly attachable to a second part of the electric appliance , the male hinge portion having an end comprising a tubular pin which creates an internal passage towards the second assembly, said second assembly being made up of a female hinge portion and of a lower internal cover and being arranged relative to the male hinge portion such as to rotatably receive the tubular pin thereof in order that in use the appliance can assume all its operating positions, the hinge further comprising a protecting tube for protecting cables such as may provide an electric connection between said two parts of the appliance .

For passing the cables from the lower to the upper part of the grill, systems of spring type are also in use today, so that there is a flexibility and the movement of the two parts of the appliance is made possible.

These systems besides their high cost also involve difficulties during storage of the appliance as well as during its operation .

The advantage of the invention is that the hinge itself provides a continuous passage for protecting the cables along the whole path through the hinge from the upper to the lower part of the appliance. Such an advantage is provided by a hinge according to claim 1.

The hinge according to the invention comprises an assembly which is fixed to the upper part of the appliance and formed in such a way so that the cables coming out from the upper part of the appliance pass through the hollow of said assembly and then pass through another equivalent assembly fixed to the lower part of the appliance so that the electric connection of the upper and lower parts of the appliance is obtained .

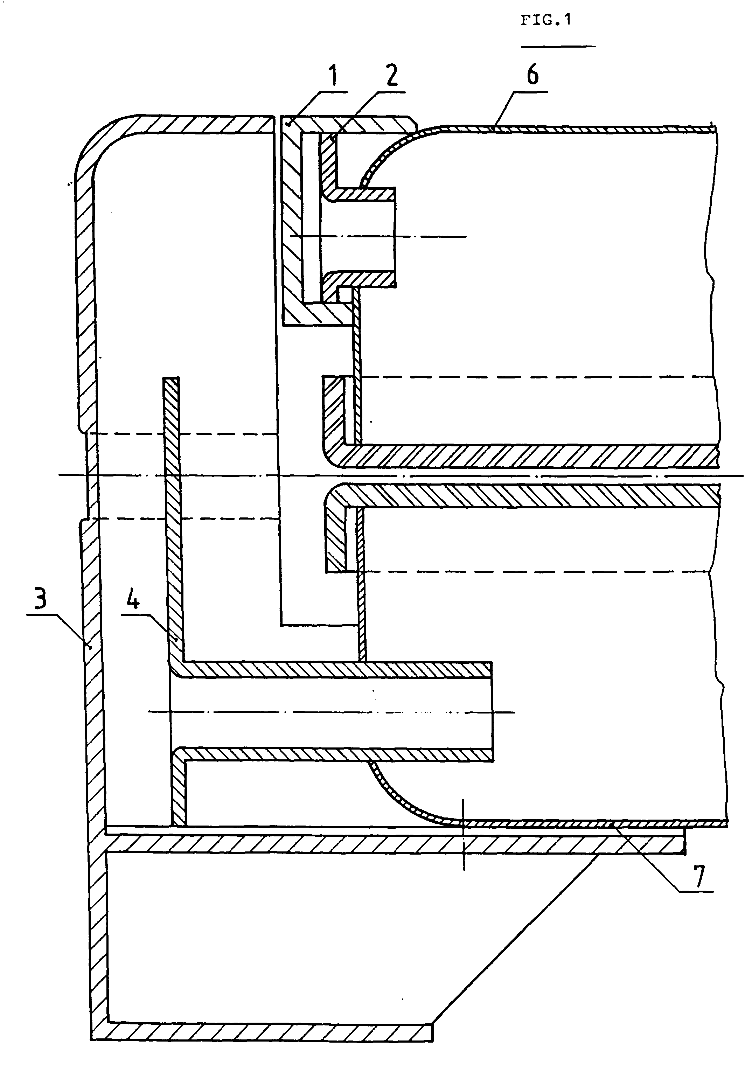

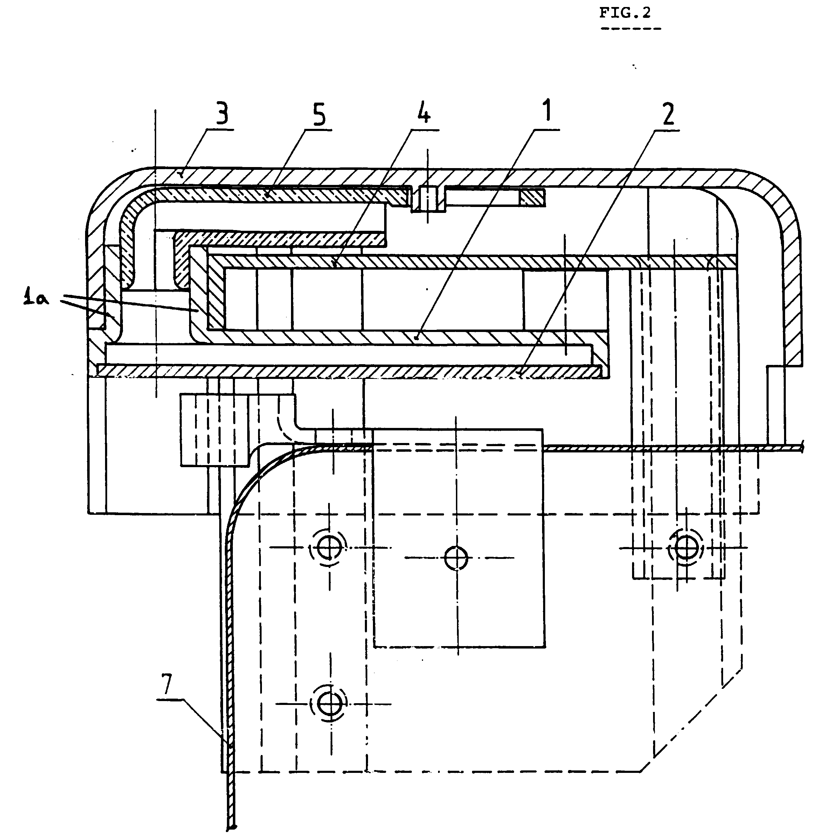

The hinge with the above characteristic is presented in the drawings 1 and 2 . The drawing 1 is a vertical section of the two assemblies and the drawing 2 a horizontal section .

The way of application of the invention is presented according to the drawings . In the drawings we can see :

The male hinge 1 which is screwed onto the upper part 6 of the appliance and holds at the same time the upper internal cover 2 which comprises a tubular passage which enters into the upper part of the appliance . The male hinge ends to a tubular shaft 1a thus creating an internal passage towards the assembly which is fixed onto the lower part 7 of the appliance .

This second assembly made up of a female hinge 3 and a lower internal cover 4 is fixed to the lower part 7 of the appliance and is arranged in such a way so as to form a channel which allows the tubular pin 1a of the male hinge 1 to move , so that the appliance can assume all operating positions.

A protecting tube 5 is also provided which is connected by links with the tubular pin 1a of the male hinge 1 and with the female hinge 3 for protecting the cables .

The internal hollow surfaces create a continuous tube for passage and protection of the cables across the whole length of the link allowing the electrical connection of the upper and lower parts of the appliance while at the same time protecting the cables without affecting the movements necessary for the functioning of the appliance .

## Claims

1. A hinge for a grill composed of a first assembly, comprising a male hinge portion (1) attachable by screws to an upper part (6) of a grill and an upper internal cover (2) , and of a second assembly attachable to a lower part (7) of a grill, said upper internal cover being held by the male hinge portion (1) and provided with a tubular passage for entering an upper part (6) of a grill, the male hinge portion (1) having an end comprising a tubular pin (1a) which creates an internal passage towards the second assembly, said second assembly being made up of a female hinge portion (3) and of a lower internal cover (4) and being arranged relative to the male hinge portion (1) such as to rotatably receive the tubular pin (1a) thereof in order that in use a grill can assume all its operating positions, the hinge further comprising a protecting tube (5) inserting into the tubular pin (1a) of the male hinge portion (1) and connected by links with the female hinge portion (3) for protecting cables such as may provide an electric connection between upper and lower parts of a grill, whereby the internal hollow surfaces of the hinge define a continuous passage for protection of such cables along the whole path through the hinge from an upper to a lower part of a grill thereby protecting such cables without affecting the movements necessary for the two parts of a grill to assume all operating positions .

## Patentansprüche

1. Ein Scharnier fur ein Grillgerät besteht aus zwei Bauteilen. Das erste Bauteil umfabt ein männliches Scharnierteil (1), welches mit dem oberen Teil (6) des Grills und dem Oberteil der inneren Abdeckung (2) verscharaubt werden kann. Das zweite Bauteil kann am unteren Teil (7) des Grills angebracht werden. Daw bereits erwahnte Oberteil der inneren Abdeckung wird durch das männliche Scharnierteil (1) gehalten. Weiterhin enthält es eine Röhrenöffnung, damit das Oberteil (6) des Grillgerätes eingesetzt werden kann. Daw männliche Scharnierstuck hat hierzu an einem Ende einen röhrenförmigen Stecker (1a), welcher im Geräteinneren eine Verbindung zum zweiten Bauteil bildet. Dieses zweite Bauteil besteht aus einem weiblichen scharnierteil (3) und der unteren abdeckung (4) und wird im verhältnis so zum männlichen scharnierteil (1) angebracht, dab der röhrenförmige stecker (1a) frei drehbar in das zweite bauteil eingefuhrt werden kann. Dies gewährleistet, dab das grillgerät auch in allen einstellungspositionen netrieben werden kann. Weiterhin umfabt das scharnier einen schutzschlauch (5), die in den röhrenförmigen stecker (1a) des männlichen scharnierteils (1) mundet, und mittels verbindungsstucken an das weibliche scharnierteil (3) gefugt wird. Dieser schutzschlauch verhindert, dab zwischen dem ober- und dem unterteil des grillgerätes strom fliebt. Auf diese weise bilden die Hohlräume in den Innenflächen des scharniers einen fortlaufenden verbindungsgang. Dieser schutzt die kabel, die von den oberen zu den unteren Teilen des grillgerätes durch das scharnier verlaufen, ohne jedoch die bewegung der beiden teile einzuschränken, die erforderlich ist, damit das Gerät in allen grillpositionen betrieben werden kann.

## Revendications

1. Une charnière pour un grill est composée de deuz parties assemblées: la première partie comprenant une charnière mâle (1) fixèe par des vis à la partie supérieure du grill (6) et à la partie supérieure interne du capot (2), la deuxième partie assemblée fixée à la partie inférieure (7) du grill. Nous disons que la partie interne supérieure du capot est tenue par une charnière mâle (1) prévue avec un passage tubulaire pour faire entrer la partie supèrieure (6) du grill. La charnière mâle ayant une extrèmitè comprenant un axe tubulaire (1A) qui crée un passage inerne vers la seconde partie. Ceci étant complètè d'une charnière femelle (3), d'un capot infèrieur (4) et étant disposé par rapport à la charnière mâle (1) de facon à recevoir l'axe tubulaire (1A), de facon qu'en utilisation, le grill puisse assumer toutes ses positions de fonctionnement. La charnière au-delà contenant un tube de protection simple intègrant l'axe tubulaire (1A) de la charnière mâle (1) et connectè par des articulations avec la charnière femelle pour la protection des câbles tels qu'ils peuvent être mis en place pour une connexion èlectrique entre la partie infèrieure et supèrieure du grill. Par ce moyen, la surface intérieure de la charnière dèfinit un passage continu pour la protection des câbles le long bus de passage à travers la charnière de la partie supèrieure à la partie infèrieure du grill tout en protègeant les câbles sans affecter les mouvements nècesaires du grill pour assumer toutes les positions de fonctionnement.
